# EUROPÄISCHE PATENTSCHRIFT

(11) **EP 1 534 929 B1**
(45) Veröffentlichungstag und Bekanntmachung des Hinweises auf die Patenterteilung: **11.10.2006**
(21) Anmeldenummer: 03793750.5
(22) Anmeldetag: 23.08.2003
(51) Int. Cl.: E21D 15/44, F16B 3/00, F16B 11/00

(54) **VERFAHREN ZUM FÜGEVERBINDEN DER FUNKTIONSTEILE VON HYDRAULISCHEN ODER PNEUMATISCHEN ARBEITSVORRICHTUNGEN UND FÜGEVERBINDUNG**
METHOD FOR JOINING THE FUNCTIONAL PARTS OF HYDRAULIC OR PNEUMATIC WORKING DEVICES, AND JOINING CONNECTION
PROCEDE D'ASSEMBLAGE DES PIECES FONCTIONNELLES DE DISPOSITIFS DE TRAVAIL HYDRAULIQUES OU PNEUMATIQUES ET SYSTEME D'ASSEMBLAGE

(30) Priorität: 06.09.2002 DE 10241801
(43) Veröffentlichungstag der Anmeldung: 01.06.2005
(73) Patentinhaber: DBT GmbH, 44534 Lünen (DE)
(72) Erfinder: ZINS, Guy, F-57550 Falck (FR)
(74) Vertreter: Buschhoff, Josef
(86) Internationale Anmeldenummer: PCT/EP2003/009361
(87) Internationale Veröffentlichungsnummer: WO 2004/022917

(56) Entgegenhaltungen:
- DE-A- 19 818 475
- FR-A- 2 072 357
- FR-A- 2 118 637
- GB-A- 1 541 252

## Beschreibung

Die Erfindung betrifft eine Fügeverbindung für Funktionsteile von hydraulischen oder pneumatischen Arbeitsvorrichtungen, insbesondere von Arbeitszylindern wie von Stempeln für den untertägigen Bergbau, mit einem einen Außenwandungsabschnitt aufweisenden ersten Teil und einem einen Innenwandungsabschnitt aufweisenden zweiten Teil, die mit sich überlappenden Wandungsabschnitten zusammengefügt und in diesem Bereich miteinander verbunden werden.

Insbesondere im untertägigen Bergbau werden eine Vielzahl von hydraulisch betätigten Gruben- oder Ausbaustempeln benötigt, um den bergmännisch hergestellten untertägigen Hohlraum wie Streb oder Strecke offen zu halten. Ferner kommen hydraulische Arbeitszylinder auch beim Rücken der Gewinnungsgeräte und dergleichen zum Einsatz. Die Ausbau- oder Grubenstempel können als Einfacharbeitszylinder oder als teleskopierbare Mehrfacharbeitszylinder ausgeführt sein, während die hydraulischen Rückzylinder meist als doppelt wirksame, in Ausschub- und Einschubrichtung mit der Hubkraft betätigbare Hydraulikarbeitszylinder ausgeführt werden. Jeder Arbeitszylinder umfasst hierbei wenigstens einen Hohlraum im Innern eines Zylinders sowie einen Kolben mit Kolbenstange als axial beweglichen Körper, die jeweils aus wenigstens zwei Teilen bestehen, die fluiddicht miteinander verbunden werden müssen und im verbundenen Fügezustand auch hohen hydraulischen Drücken von mehreren hundert bar standhalten müssen.

Teleskopierbare Grubenstempel sind beispielsweise aus der DE-AS 1 2 07 317, DE 100 45 680 A1 oder DE 43 23 462 bekannt. Jede Zylinderstufe umfasst ein Zylinderrohr als ersten Funktionsteil und einen Zylinderkopfdeckel als zweiten Funktionsteil, die über Sprengringverbindungen, Schweiß- oder Schraubverbindungen abgedichtet miteinander verbunden sind. Das Verschweißen bietet den Vorteil, daß Undichtigkeiten an den Verbindungsstellen nicht auftreten können. Nachteil beim Verschweißen ist allerdings, daß das Gefüge der für die Zylinder verwendeten Rohre und das Gefüge der Zylinderkopfdeckel, Bundringe oder Fußplatten durch das Anschweißen beeinträchtigt oder zerstört werden kann. Um kaltgezogene Rohre für die Zylinder verwenden zu können, wurde in der DE 43 23 462 C2 daher vorgeschlagen, die Wandungsabschnitte der Zylinder mit den zugehörigen Fußplatten oder Zylinderkopfdeckeln über Scherdräte zu befestigen, die in eine Verbindungsnut eingetrieben sind. Andere Fügeverbindungen zwischen den Funktionsteilen von hydraulischen oder pneumatischen Arbeitsvorrichtungen bestehen aus miteinander korrespondierenden Gewinden, Splinten, Spannhülsen u.dgl. Die Abdichtung des Füge- oder Trennspaltes zwischen den miteinander verbundenen Teilen erfolgt über statische Dichtungen.

Aus der FR 2 072 357 ist eine Fügeverbindung bekannt die durch Injektion eines fließfähigen Produktes in einen Hohlraum entsteht.

Aufgabe der Erfindung ist es, eine Fügeverbindung für Funktionsteile von hydraulischen oder pneumatischen Arbeitsvorrichtungen zu schaffen, die kurze Montagezeiten zwischen den Funktionsteilen ermöglicht, das Gefüge der für die Funktionsteile verwendeten Materialien nicht negativ beeinflusst und zugleich auch eine Abdichtung des Fügespaltes zwischen den Funktionsteilen ermöglicht.

Diese und weitere Aufgaben werden durch die in Anspruch 1 angegebene Erfindung gelöst.

Die Erfindung kennzeichnet sich durch die Schritte Anordnen der Teile mit sich überlappenden Wandungsabschnitten unter Ausbilden eines Hohlraums mittels in beiden Wandungsabschnitten vorgesehenen Vertiefungen und Ausfüllen des Hohlraums mit einer im erwärmten oder plastifizierten Zustand fließfähigen Gußmasse aus Kunststoff, die im ausgehärteten oder erstarrten Zustand die beiden Teile durch Formschluß miteinander verbindet. Der in den Hohlraum zwischen den Wandungsabschnitten der Funktionsteile eingebrachte Kunststoff verhindert, sobald er ausgehärtet oder erstarrt ist, durch Formschluß Relativbewegungen zwischen den Funktionsteilen, da er in die in beiden Wandungsabschnitten vorgesehenen Vertiefungen eindringt, diese vollständig ausfüllt und in dem Hohlraum zu einem formstabilen, quasi starren Körper erstarrt. Die Plastifizierungstemperaturen für Kunststoffgußmassen liegen mit etwa 300°C wesentlich niedriger als die Schmelztemperaturen von Metallen, so daß eine Beeinflussung der Gefügestruktur der aus Metallen bestehenden Funktionsteile nicht auftreten kann. Damit ist es besonders vorteilhaft möglich, daß die Funktionsteile, insbesondere die Zylinder, aus kaltgezogenen Rohren bestehen können und sämtliche Funktionsteile schon vor dem Herstellen der Fügeverbindung z.B. beschichtet werden können. Auch die Gefahr des Verzuges der aus Metall bestehenden Funktionsteile, wie er beim Fügen der Teile mit einer Schweißverbindung auftreten kann, besteht nicht. Gleichzeitig ist vorteilhaft, daß Fertigungsungenauigkeiten an den sich überlappenden Wandungsabschnitten durch den eingegossenen Kunststoff, unter Berücksichtigung der Schwindungsneigung des Kunststoffmaterials von etwa 0,2% bis 1% fast vollständig eliminiert werden.

In bevorzugter Ausgestaltung wird als Gußmasse eine Spritzgußmasse eingesetzt, die insbesondere mit hohem Druck in den Hohlraum eingespritzt wird. Der Druck beim Einspritzen kann beispielsweise 200 bar betragen, um den gesamten Hohlraum trotz vergleichsweise langer Fließwege vollständig und in kurzer Zeitspanne auszufüllen. Vorzugsweise werden vor dem Einfüllen oder Einspritzen der Gußmasse zumindest die Wandungsabschnitte der den Überlappungsbereich bildenden Funktionsteile z.B. durch induktive Beheizung vorgewärmt. Ferner ist es vorteilhaft, daß bei bestimmten Funktionsteilen mit der Formschlußverbindung zugleich eine Führungsmanschette od.dgl. für einen axial beweglichen Körper wie den Kolbenschaft oder einen Innenzylinder an der Innenseite eines der Funktionsteile oder für den Teil selbst an dessen Außenseite ausgebildet werden kann und/oder auch ein Dichtungssystem für die Führungsmanschette ausgebildet werden kann. Bei der Montage und beim Fügen der Funktionsteile kann dann ein zusätzlicher Montageschritt für Führungsbänder für den axial beweglichen Teil wie insbesondere die Kolbenstange oder den Innenzylinder einer Zylinderstufe eines mehrstufigen Arbeitszylinders entfallen.

Die erfindungsgemäße Fügeverbindung ist dadurch gekennzeichnet, daß beide Wandungsabschnitte eine Vertiefung aufweisen, die im Verbindungszustand einen Hohlraum bilden, der mit fließfähiger Gußmasse aus Kunststoff ausgefüllt ist, die nach ihrem Aushärten oder Erstarren die beiden Teile durch Formschluß miteinander verbindet. Bei der erfindungsgemäßen Fügeverbindung werden die Vertiefungen in den vorzugsweise aus Metall bestehenden Funktionsteilen durch die zu einem festen Riegelkörper erstarrte Gußmasse ausgefüllt und dieser in die Vertiefungen formschlüssig eingreifende Riegelkörper verhindert Relativverschiebungen zwischen den beiden Funktionsteilen. Zugleich übernimmt die im Hohlraum ausgehärtete Gußmasse die Abdichtung des Fügespaltes zwischen den Wandungsabschnitten der beiden Funktionsteile, so daß Dichtungsmittel wie Loctite, die beim Verbinden der Funktionsteile von Arbeitszylindern bisher eingesetzt wurden und eine enorme Umweltbelastung darstellen, nicht mehr notwendig sind. Der Zeitbedarf zum Herstellen der Fügeverbindung ist sehr kurz und hängt von der Einspritzdauer für das Kunststoffmaterial und dessen Aushärtezeit ab. Insgesamt läßt sich mit der erfindungsgemäßen Fügeverbindung die Montagezeit für die Teile erheblich minimieren.

In bevorzugter Ausgestaltung weist jeweils eines der Funktionsteile eine Einfüll- oder Einspritzöffnung für die Gußmasse auf, die über einen internen Gußkanal in die zugehörige Vertiefung mündet. Dieser Gußkanal kann im einfachsten Fall aus einer Bohrung bestehen. Weiter vorzugsweise weisen beide Wandungsabschnitte mehrere Vertiefungen auf. Hierdurch entstehen im Überlappungsbereich beider Funktionsteile mehrere, gegebenenfalls weitestgehend getrennt voneinander ausgebildete Hohlräume, in denen jeweils ein Riegelkörper erstarrt, wodurch sich die von der Fügeverbindung aufnehmbare Kraft erhöht. Dies ist insbesondere bei hydraulischen Arbeitszylindern erforderlich, die das bevorzugte Anwendungsgebiet der Erfindung bilden und für Betriebsdrücke von mehreren hundert bar ausgelegt werden. Zweckmäßigerweise bestehen die Vertiefungen aus umlaufenden Riefen, Rillen, Nuten od.dgl.. Diese können insbesondere quer zur Trennfuge zwischen den Funktionsteilen ausgerichtet sein. Besonders günstig ist, wenn die Riefen, Rillen, Nuten od. dgl. zum Wandungsabschnitt hin ansteigende Bodenabschnitte aufweisen, wobei vorzugsweise die Bodenabschnitte rechtwinklig zueinander abgewinkelt sind und/oder der Neigungswinkel des längeren Bodenabschnitts zum Wandungsabschnitt 25° bis 35°, insbesondere etwa 30° beträgt. Bei einem Neigungswinkel des längeren Bodenabschnitts der Vertiefung von etwa 30° hat sich überraschend ein Haltekraftoptimum der erfindungsgemäß mit dem eingegossenen Kunststoff erzeugten Fügeverbindung gezeigt. Andererseits erhöht sich die von der Fügeverbindung aufnehmbare Haltekraft linear mit der Anzahl der Rillen, Nuten oder Riefen und mit dem wirksamen Querschnitt in der Hauptbelastungsrichtung parallel zur Trennfuge.

Zweckmäßigerweise ist im Wandungsabschnitt wenigstens eines der Teile ein quer zu allen Vertiefungen verlaufender Verteilkanal vorgesehen, wobei vorzugsweise der Gußkanal in den Verteilkanal mündet. Dies hat den Vorteil, daß die Wandungsabschnitte der beiden Funktionsteile ineinander gesteckt werden können, ohne daß für eine optimale Verteilung des eingespritzten fließfähigen Kunststoffs eine bestimmte Stellung zwischen den beiden Funktionsteilen erforderlich ist. Das im Verteilkanal ausgehärtete oder erstarrte Kunststoffmaterial bildet zugleich eine zusätzliche Verdrehsicherung zwischen den miteinander verbundenen Teilen und separate Verdrehsicherungsmittel wie Madenschrauben oder Splinte können entfallen.

Insbesondere bevorzugt wird, wenn die Riefen, Rillen, Nuten od.dgl. in den Wandungsabschnitten beider Teile derart angeordnet sind, daß die Gußmasse zu Ringen mit vergleichsweise kleinen Querschnitten, vorzugsweise rechteckigen Querschnitten erstarrt oder aushärtet. Die Ringe können dann derart in den Vertiefungen bzw. im Hohlraum ausgebildet werden, daß die Hauptdiagonale der Querschnitte der erstarrten Ringe mit der Hauptbelastungsrichtung einer durch Zug- oder Druckkräfte hervorgerufenen Trennkraft zwischen den Funktionsteilen zusammenfällt. Besonders vorteilhaft ist hier, wenn benachbarte Vertiefungen durch einen Stegabschnitt voneinander getrennt sind, wobei im Verbindungszustand die Stegabschnitte der Wandungsabschnitte des ersten und zweiten Teils unmittelbar übereinanderliegen. Dies verbessert insbesondere auch die Abdichtfunktion der erfindungsgemäßen Fügeverbindung, da die aneinandergrenzenden Stegabschnitte jeweils einen Dichtspalt bilden, zu dessen beiden Seiten sich ein erstarrter Körper aus Kunststoffmaterial befindet und die Dichtfunktion übernimmt.

Die erfindungsgemäße Fügeverbindung bietet den weiteren Vorteil, daß bei bestimmten Funktionsteilen zeitgleich mit dem Ausbilden der Fügeverbindung mit der Gußmasse auch eine Führungsmanschette od.dgl. für einen im Innern des jeweiligen Funktionsteils axial beweglichen Körper oder für den jeweiligen Teil selbst ausgießbar ist, indem die Vertiefung des Wandungsabschnitts dieses Funktionsteils über einen Zuführkanal in einen Ringraum mündet. Es versteht sich, daß hierzu gegebenenfalls beiderseits des Ringraums geeignete Dichtungen wie Doppellippendichtungen oder Abstreifer angeordnet werden müssen, die einerseits verhindern, daß die Gußmasse aus dem Ringraum austritt, und andererseits nach Aushärten der Gußmasse an der Führungsmanschette eine Abdichtung des Druckraumes im Innern des Zylinders od.dgl. übernehmen. Das Dichtungssystem für die Führungsmanschette kann auch zeitgleich mit der Führungsmanschette oder vorher ausgegossen werden.

Um die Fügeverbindung in kurzer Zeit herstellen zu können, ist besonders vorteilhaft, wenn die Gußmasse eine Spritzgußmasse ist. Für den bevorzugten Einsatz des Verfahrens und der Fügeverbindung bei hydraulischen Arbeitsvorrichtungen wie Ausbaustempeln, Hydraulik- und Rückzylindern wird zweckmäßigerweise eine Vergußmasse aus Kunststoff gewählt, die im ausgehärteten oder erstarrten Zustand Scherkraftbelastungen von wenigstens 20 N/mm², vorzugsweise wenigstens 45 N/mm² standhält. Die Gußmasse kann ein Thermoplast, insbesondere ein Polyamid (PA) oder ein Polyphenylenether (PPE) oder ein Polyterephtalat (PTP), insbesondere ein Polybutylenetherephtalat (PBT), oder ein Polyvinylidenfluorid (PVDF) sein. Besonders vorteilhaft ist, wenn die Gußmasse eine faserverstärkte Gußmasse, insbesondere eine glasfaserverstärkte Gußmasse mit beispielsweise etwa 30% Anteil an Glasfasern ist.

Die Fügeverbindung kann vorteilhaft Verwendung finden, wenn die Funktionsteile den Zylinder eines Arbeitszylinder bilden und eines der Teile aus einem Zylinderrohrabschnitt besteht und das andere Teil aus einem Zylinderdeckel besteht. Der Zylinderdeckel kann hierbei einstückig mit einem Anschlußauge versehen sein, während das Zylinderrohr besonders vorteilhaft aus einem kaltgezogenen Rohr bestehen kann. Durch den Einsatz kaltgezogener Rohre als Ausgangsmaterial lassen sich Materialkosteneinsparungen bei den Zylindern von bis zu 50% gegenüber warmgezogenen Rohren erzielen. Das Verfahren und die Fügeverbindung können desweiteren vorteilhaft Anwendung finden, wenn die Funktionsteile eine Zylinderstufe eines mehrstufigen Hydraulikstempels bilden oder wenn der erste Teil aus dem Zylinder eines Arbeitszylinders besteht und der zweite Teil aus einem von der Kolbenstange zentral durchgriffenen Verschlußring für den Zylinderdruckraum besteht. Bei diesem Verschlußring ist es dann besonders günstig, wenn gleichzeitig mit der Fügeverbindung auch die Führungsmanschette an- bzw. ausgegossen wird. Ein weiteres Einsatzgebiet für das Verfahren und die Fügeverbindung bildet der Kolben eines hydraulischen Arbeitszylinders, wobei dann der erste Teil aus einer Kolbenstange und der zweite Teil aus einem im Querschnitt kreisförmigen Kolbenring bestehen kann.

Die erfindungsgemäße Fügeverbindung bietet desweiteren den Vorteil einer einfachen und schnellen Wartung, Instandsetzung und Erneuerung der Fügeverbindung, der Funktionsteile und oder verwendeter Dichtungen u. dgl., indem die Wandungsabschnitte miteinander verbundener Teile und die Fügeverbindung auf geeignete Weise, beispielsweise durch induktive Beheizung, auf den Temperaturbereich der Plastifizierungstemperatur des verwendeten Kunststoffmaterials von bis zu etwa 300°C aufgeheizt werden, um die Fügeverbindung und die Funktionsteile bei plastifizierter bzw. aufgeweichter Kunststoffmasse zu trennen. Anschließend kann das in den Vertiefungen, dem Verteilkanal und dem Gußkanal verbliebene Kunststoffmaterial entfernt, beispielsweise ausgeschält oder ausgebrannt werden, und nach dem erneuten Ineinanderstecken der Wandungsabschnitte der Teile eine neue erfindungsgemäße Fügeverbindung im Spritzgußverfahren hergestellt werden.

Weitere Vorteile und Ausgestaltungen der erfindungsgemäßen Fügeverbindung ergeben sich aus den Unteransprüchen und der nachfolgenden Beschreibung verschiedener Verwendungsmöglichkeiten der Fügeverbindung an in der Zeichnung gezeigten Hydraulikzylindern und Ausbaustempeln für den untertägigen Bergbau. In der Zeichnung zeigen:
**Fig. 1** einen Längsschnitt durch einen Hydraulikzylinder mit insgesamt drei erfindungsgemäßen Fügeverbindungen am Gehäuse des Zylinders, am Verschlußring des Zylinderraums und zwischen Kolben und Kolbenstange;
**Fig. 2** schematisch eine Detailansicht von II in Fig. 1;
**Fig. 3** schematisch eine Detailansicht von III in Fig. 1;
**Fig. 4** schematisch im Schnitt eine Detailansicht von IV in Fig. 2 mit dem Hohlraum zwischen Kolbenring und -stange;
**Fig. 5** schematisch eine Ansicht entlang V-V in Fig. 4; und
**Fig. 6** schematisch einen Schnitt durch einen teleskopierbaren Ausbaustempel, dessen Teile mit der erfindungsgemäßen Fügeverbindung miteinander verbunden sind.

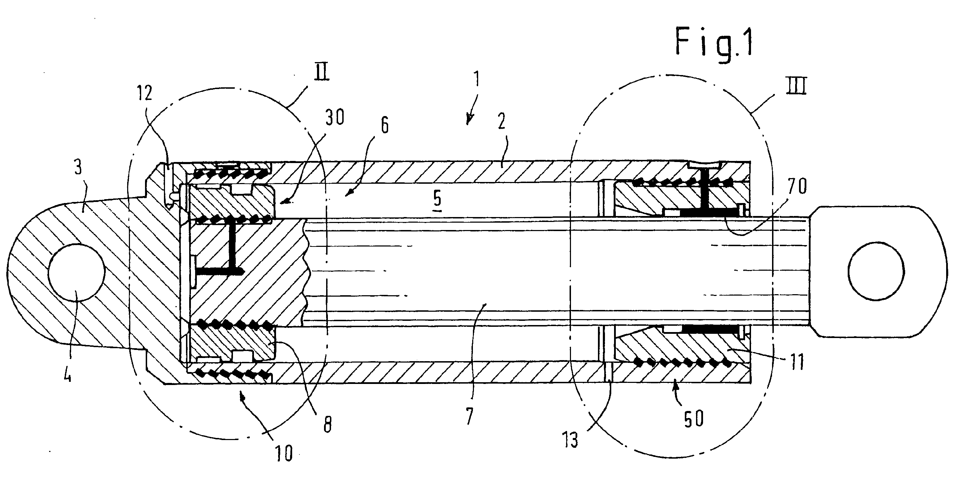

Der in Fig. 1 insgesamt mit 1 bezeichnete Hydraulikzylinder kann z.B. als Rückzylinder beim schreitenden Ausbau eingesetzt werden, um einen Förderer bzw. ein Gewinnungsgerät in Richtung einer Abbaufront vorzurücken und anschließend durch Einfahren des in beiden Richtungen aktivierbaren Hydraulikzylinders ein angeschlossenes Ausbaugestell nachzuholen. Der Hydraulikzylinder 1 umfasst ein Außenzylinderrohr 2, welches am in Fig. 1 linken Ende mittels einer ersten erfindungsgemäßen, insgesamt mit 10 bezeichneten Fügeverbindung aus erstarrtem Kunststoffgußmaterial mit einem Zylinderdeckel 3 fest und zugleich abgedichtet verbunden ist. Am Zylinderdeckel 3 ist integral ein Anschlußauge 4 zum gelenkigen Anschließen des Zylinders 1 an einem Widerlager wie einem Lagerbock ausgebildet. Im Innenraum 5 des Hydraulikzylinders 1 ist ein Kolben 6 verschieblich geführt, der aus einer Kolbenstange 7 und einem ringförmigen Kolbenkörper 8 besteht, die über eine zweite erfindungsgemäße Fügeverbindung 30 aus erstarrtem Kunststoffgußmaterial fest und abgedichtet miteinander verbunden sind. Am in Fig. 1 rechten, vorderen Ende des Hydraulikzylinders 1 ist die Kolbenstange 7 innerhalb eines Verschlußrings 11 geführt, der den Druckraum 5 an diesem Zylinderende abschließt und mit der Innenwand des Außenzylinderrohres 2 über eine dritte erfindungsgemäße, aus erstarrtem Kunststoffgußmaterial bestehende Fügeverbindung 50 fest und abgedichtet verbunden ist. Der Kolbenkörper 8 des Kolbens 6 kann beidseitig mit dem Betriebsdruck beaufschlagt werden, wobei zum Ausschieben der Kolbenstange 7 ein Hydraulikfluid über die Bohrung 12 in den linken Hubraum einströmt und zum Einfahren des Zylinders der Hubraum 5 an der Rückseite des Kolbenkörpers 8, wie dargestellt, über die Bohrung 13 mit dem Hydraulikfluid beaufschlagt wird. Der Betriebsdruck des Hydraulikfluids im jeweiligen Hubraum kann hierbei einige hundert bar erreichen, wie dies für entsprechende im Bergbau eingesetzte Hydraulikzylinder bekannt und erforderlich ist.

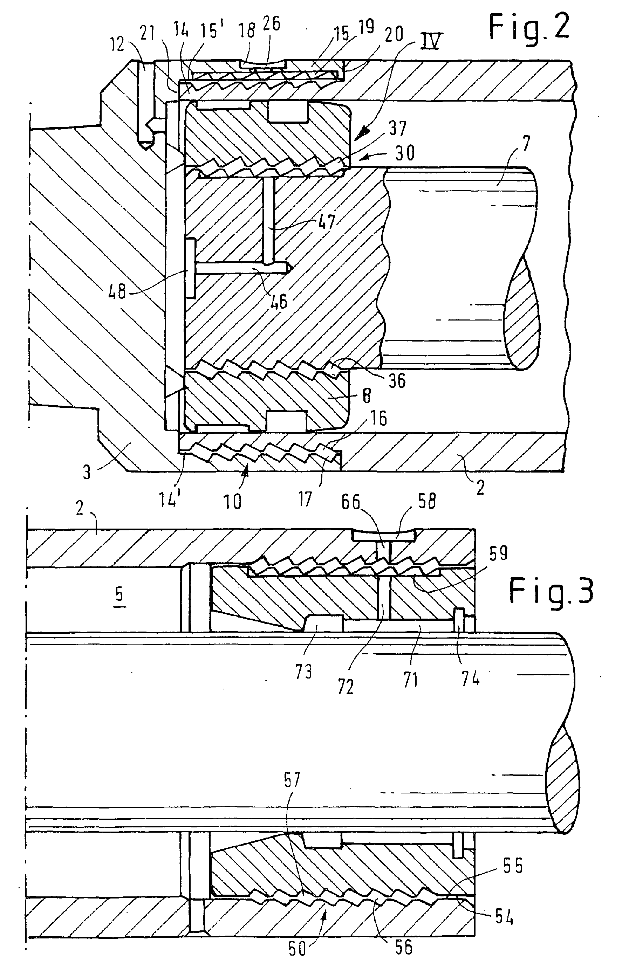

Die Erfindung am Hydraulikzylinder 1 besteht insbesondere in den Fügeverbindungen 10, 30 und 50, die in Fig. 1 als schwarze Körper Masse im ausgehärteten bzw. erstarrten Zustand dargestellt sind, während sie in den Detailzeichnungen nach den Fig. 2 bis 5 nicht dargestellt sind. In diesen Fig. sind nur die Hohlräume zu erkennen, in welche die plastifizierte, fließfähige Gußmasse aus geeignetem Kunststoffmaterial einströmt. Dies wird nun unter Bezugnahme auf die Fig. 2 bis 5 weiter erläutert.

Fig. 2 zeigt im Detail die Fügeverbindung 10 zwischen dem Außenzylinderrohr 2 und dem Zylinderdeckel 3 sowie die Fügeverbindung 30 zwischen dem Schaftende des Kolbenschaftes 7 und dem Kolbenkörper 8. Das aus einem kaltgezogenen Metallrohr bestehend Außenzylinderrohr 2 weist stirnendseitig einen Bund mit ringförmigem Stegfortsatz 14 auf, dessen Außenwandungsabschnitt 14' mit hier insgesamt sechs axial nebeneinander angeordneten, konzentrischen Rillen 16 als Vertiefungen versehen ist. Der Außenwandungsabschnitt 14' des Stegfortsatzes 14 wird in der gezeigten Verbundstellung von einem integralen Stegfortsatz 15 am Zylinderdeckel 3 überlappt, an dessen Innenwandung 15' ebenfalls eine Reihe von hier sechs Rillen 17 ausgebildet ist. Die Stegfortsätze 14,15 mit den Wandungsabschnitten 14',15' sind mit geringem Spiel (Spielpassung oder Übergangspassung) ineinanderschiebbar und die Rillen 16, 17 bestehen aus rechtwinklig zueinander abgewinkelten Bodenabschnitten, die bei ineinandergeschobenen Stegfortsätzen Hohlräume mit rechteckigem Querschnitt erzeugen, in die ein geeignetes Kunststoffmaterial wie ein mit 30% Glasfasern verstärktes Polyamid (nicht gezeigt) in plastifiziertem, fließfähigem Zustand mit hohem Druck über die Einspritzöffnung 18 im Stegfortsatz 15 des Zylinderdeckels 3 eingespritzt werden kann, um die Fügeverbindung 10 herzustellen. Die Verteilung des verflüssigten Kunststoffmaterials auf die einzelnen Hohlräume bzw. Rillen mit rechteckförmigem Querschnitt erfolgt über den schematisch unmittelbar unterhalb der Einspritzöffnung 18 angedeuteten und mit diesem über den Gußkanal 26 verbundenen Verteilkanal 19, welcher sich in Axialrichtung über die gesamte Breite des mit den Rillen 16,17 versehenen Bereichs der Wandungsabschnitte 14',15' erstreckt. Die Enden 20,21 der Stegfortsätze 14,15 stoßen jeweils an einem Bund des Zylinders 2 bzw. des Zylinderdeckels 3 an, um die Hohlräume in axialer Richtung beidseitig abzuschließen und die mit hohem Druck von beispielsweise 300 bar und temperaturen von etwa 300 °C eingespritzte Gußmasse aus Kunststoff in den Hohlräumen zurückzuhalten. Nach dem Erstarren bzw. Aushärten des Kunststoffmaterials werden der Zylinderdeckel 3 und der Zylinder 2 durch Formschluß aufgrund der die Vertiefungen 16,17 ausfüllenden, ausgehärteten Ringe (Fig. 1) aus Kunststoffmaterial miteinander verbunden und die Ringe bewirken zugleich eine Abdichtung der Trennfuge zwischen den beiden Teilen 2,3. Das Kunststoffmaterial wird vorzugsweise derart gewählt, daß es in erstarrtem Zustand Zugbelastungen von etwa 50 N/mm² aufnehmen kann. Geeignete Materialien sind beispielsweise das Polyamid STANYL ® oder das Polybutyleneterephtalat ARNITE ® der Firma DSM, jeweils mit 30% Glasfasern verstärkt. Mit einer Anzahl von sechs oder mehr Ringen und deren Anordnung in einer Weise, daß die einzelnen Ringe entlang ihrer breitesten Diagonale durch die Druckkräfte zwischen den Teilen 2,3 belastet werden, kann die Fügeverbindung 10 hydraulischen Drücken im Hubraum von über 300 bar ausgesetzt werden, ohne daß die Teile 2,3 voneinander getrennt werden oder Undichtigkeiten zwischen ihnen auftreten.

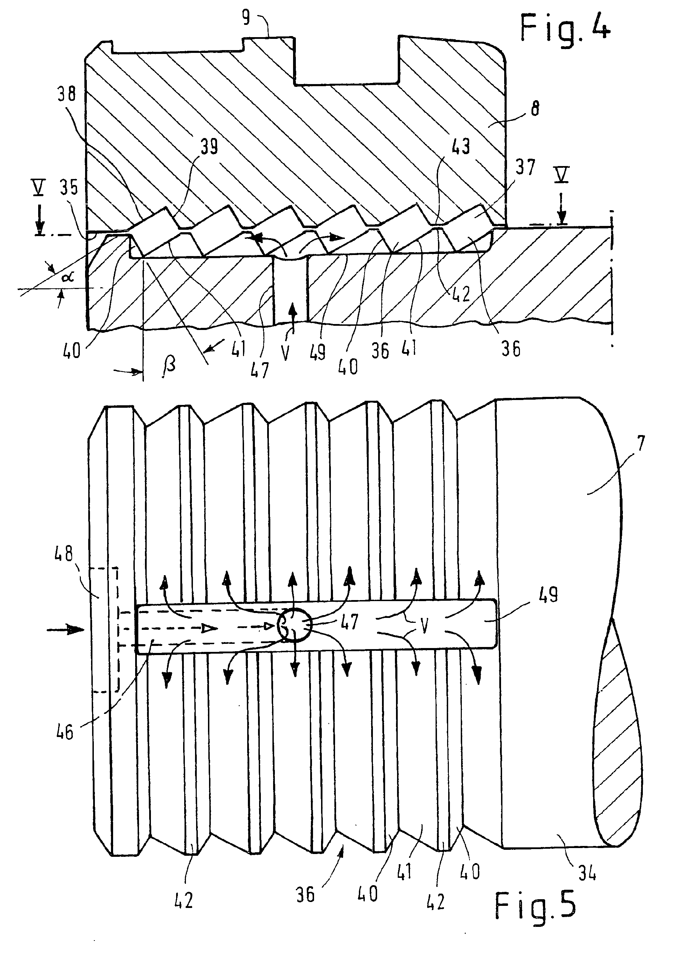

Die Fig. 2, 4 und 5 zeigen als weiteres Ausfürungsbeispiel die Fügeverbindung 30 zur starren und abgedichteten Befestigung des Kolbenkörpers 8 an einem Ende der Kolbenstange 7. Der ringförmige Kolbenkörper 8, der mit seiner Außenwand 9 an der Innenwand des Zylinder 2 (Fig. 2) abgedichtet entlanggleiten kann, um zu beiden Seiten des Kolbenkörpers 8 Druckräume auszubilden, ist an seiner ringförmigen Innenwandung 35, wie aus Fig. 4 gut ersichtlich ist, mit hier sechs rillenförmigen Vertiefungen 37 versehen, die jede rechtwinklig zueinander abgewinkelte Bodenabschnitte 38,39 aufweist. Im gezeigten Montagezustand, in welchem die Kolbenstange 7 und der Kolbenkörper 8 miteinander verbunden werden, liegen den rillenförmigen Vertiefungen 37 im Kolbenkörper 8 Vertiefungen 36 gegenüber, die in der Außenwandung 34 der Kolbenstange 7 ausgebildet sind und ebenfalls rechtwinklig zueinander abgewinkelte Bodenabschnitte 40,41 umfassen. Der Außendurchmesser am Wandungsabschnitt 34 der Kolbenstange 7 ist mit Spielpassung oder mit Übergangspassung kleiner als der Innendurchmesser am Innenwandungsabschnitt 35 des Kolbenkörpers 8, so daß Kolbenkörper 8 und Kolbenstange 7 ineinandergesteckt werden können. Zwischen den Bodenabschnitten 40,41 benachbarter Rillen 36 sind zylindrische Stegabschnitte 42 und zwischen den Bodenabschnitten 38, 39 benachbarten Rillen 37 sind zylindrische Stegabschnitte 43 von wenigen mm axialer Länge ausgebildet, die im Montagezustand unmittelbar übereinanderliegen und die von den Vertiefungen 36,37 jeweils gebildeten Hohlräume voneinander vollständig oder weitestgehend vollständig trennen. Der Neigungswinkel α des jeweils längeren Bodenabschnitts 38 bzw. 41 der Vertiefungen 37,36 beträgt relativ zu den Wandungsabschnitten 35 bzw. 34 etwa 30° und der Neigungswinkel β der kürzeren Bodenabschnitte 39 bzw. 40 senkrecht zu den Wandungsabschnitten 34,35 entsprechend 60°. Die axiale Länge der zylindrischen Stegabschnitte 42, 43 ist erheblich kürzer als die axiale Länge der Vertiefungen 36, 37 und kann z.B. bei etwa 4 mm liegen. Zum Einspritzen des Kunststoffmaterials ist an der Stirnseite der Kolbenstange 7 eine Einspritzöffnung 48 (Fig. 2) vorgesehen, die über zwei aus Bohrungen bestehenden Gußkanälen 46 und 47 in einen Verteilkanal 49 mündet, der sich in Axialrichtung der Kolbenstange 7 über sämtliche Vertiefungen 36 erstreckt. Hierdurch kann sich das fließfähige Kunststoffmaterial, wie mit den Pfeilen V in den Fig. 4 und 5 angedeutet, durch den Verteilkanal 49 hindurch über die einzelnen Hohlräume verteilen und die Hohlräume bzw. Vertiefungen 36,37 in den beiden miteinander zu verbindenden Funktionsteilen 7,8 vollständig ausfüllen. Das Kunststoffmaterial erstarrt in den Vertiefungen 36,37 zu diese ausfüllenden Ringen, die die beiden Teile 7,8 durch Formschluß miteinander verbinden und gleichzeitig die Trennfuge zwischen den Wandungsabschnitten 34 und 35 vollständig abdichten.

Fig. 3 zeigt ein drittes Anwendungsbeispiel einer erfindungsgemäßen Fügeverbindung 50 zum Verbinden des Zylinders 2 mit dem Verschlußring 11, der zugleich an seiner Innenseite mit einer Führungsmanschette (70, Fig. 1) eine Führung für die Kolbenstange 7 bildet. Die Fügeverbindung 50 besteht hier aus insgesamt acht in Axialrichtung hintereinander angeordneten Vertiefungen 56 bzw. 57 am zylindrischen Innenwandungsabschnitt 55 des Zylinders 2 bzw. am zylindrischen Außenwandungsabschnitt 54 des Verschlußrings 11 und die Geometrie der Vertiefungen 56,57 entspricht der Geometrie der Vertiefungen bei den vorherigen Ausführungsbeispielen. Das Kunststoffmaterial, mit welchem der Formschluß bei der Fügeverbindung 50 hergestellt wird, kann über die Einspritzöffnung 58 und den Gußkanal 66 im Zylinder 2 sowie einen Verteilkanal 59, der hier im Außenwandungsabschnitt 54 des Verschlußrings 11 angeordnet ist, in die einzelnen Vertiefungen bzw. Rillen 56, 57 eingebracht werden. Die Positionierung des Verteilkanals 59 erfolgt vorzugsweise dergestalt, daß der Gußkanal 66 unmittelbar in den Verteilkanal 59 mündet, um eine optimale Verteilung und Einbringung des Kunststoffmaterial in den Hohlraum und sämtliche Vertiefungen 56,57 zu erzielen. Beim Ausführungsbeispiel in Fig. 3 wird mit dem eingespritzten Kunststoffmaterial zugleich eine Führungsmanschette 70 (Fig. 1) für die Kolbenstange 7 ausgebildet. Hierzu ist an der Innenwand des Verschlußrings 11 ein Ringraum 71 ausgedreht, in welchen ein vom Boden des Verteilkanals 59 ausgehender und vorzugsweise aus einer Bohrung bestehender Zufuhrkanal 72 mündet. Der Ringraum 71 wird beiderseits durch Aufnahmeräume 73 bzw. 74 für Dichtelemente begrenzt, die zumindest beim Ausgießen des Ringraums 71 ein seitliches Austreten von Kunststoffmaterial aus dem Ringraum 71 verhindern. Die entsprechenden Dichtungen können nach dem Aushärten des Kunststoffmaterial im Ringraum 71 zu einer Führungsmanschette 70 (Fig. 1) für die Kolbenstange 7 entfernt werden und die Abdichtung zwischen der Kolbenstange 7 und dem Verschlußring 11 erfolgt dann ausschließlich über die Spaltdichtung zwischen der Kolbenstange 7 und der Führungsmanschette 70, oder in einem oder beiden Übergangsräumen 73,74 werden geeignete Dichtungen oder Abstreifer angeordnet, die im Dauerbetrieb des Hydraulikzylinders 1 für die Abdichtung sorgen. Das Ausgießen der Fügeverbindung 50 mit gleichzeitiger Ausbildung der Führungsmanschette 70 erfolgt vorzugsweise bei bereits eingesetzter Kolbenstange 7. Diese kann partiell am Außenumfang mit einem Antihaftmittel od.dgl. versehen werden, um ein Anhaften des eingespritzten Kunststoffmaterials an der Kolbenstange 7 zu verhindern.

Zum Herstellen der jeweiligen Fügeverbindung 10,30,50 bzw. der Führungsmanschette 70 wird ein geeignetes, in plastifiziertem Zustand gieß- bzw. fließfähiges Material aus Kunststoff, insbesondere ein geeignetes Spritzgußmaterial wie ein glasfaserverstärktes Polyamid oder ein glasfaserverstärktes Polybutylenterephtalat verwendet, die nach dem Aushärten die erforderliche mechanische Stabilität aufweisen. Das Kunststoffmaterial wird bei Temperaturen von bis zu etwa 300° plastifiziert und dann im fließfähigen Zustand über die jeweiligen Einspritzöffnungen 18,48 bzw. 58 in die erfindungsgemäß vorgesehenen Hohlräume eingespritzt, die relativ zur Trennfuge Hinterschneidungen in beiden miteinander zu verbindenden Teilen umfassen. Das Füllvolumen der jeweiligen Hohlräume ist bekannt und die Spritzgußmasse wird dosiert mit hohem Druck von über 200 bar eingespritzt. Aufgrund der relativ langen und schmalen Fließwege kann der Einspritzvorgang eine gewisse Zeitspanne erfordern, so daß es vorteilhaft ist, die miteinander zu verbindenden Teile aus Metall, wie beispielsweise die Kolbenstange 7 und den Kolbenkörper 8 oder den Zylinderdeckel 3 und den Zylinder 2 vor dem Einspritzen des Kunststoffmaterials auf Temperaturen um 100 ° oder höher vorzuwärmen. Sobald dann die eingespritzte Kunststoffmasse ausgehärtet ist, können die Teile eingesetzt werden. Die Montagezeit insgesamt ist gering und die Montage kann voll automatisiert durchgeführt werden.

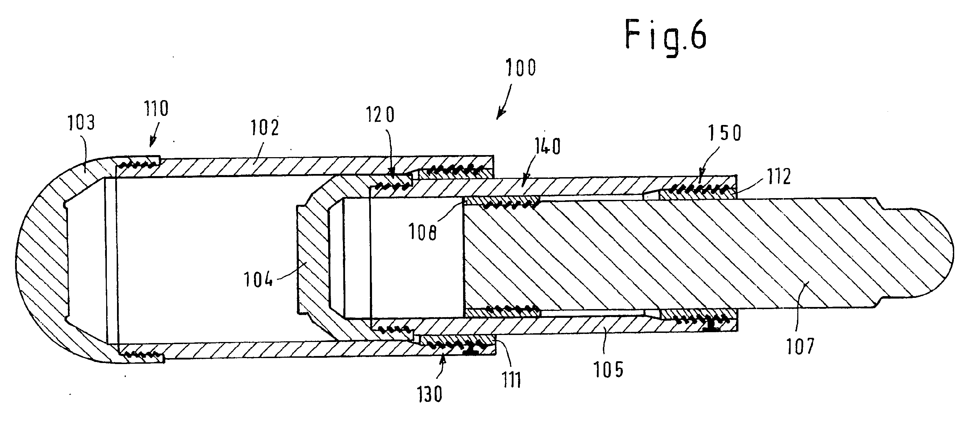

Fig. 6 zeigt in einem weiteren Ausführungsbeispiel, wie mit der erfindungsgemäßen Fügeverbindung die Funktionsteile eines teleskopierbaren Hydraulikstempels 100 verbunden werden können, der z.B. als Gruben- oder Ausbaustempel für die Hangendabstützung im untertägigen Bergbau zum Einsatz kommen kann. Im gezeigten Ausführungsbeispiel werden die Einzelteile des Ausbaustempels 100 mit insgesamt fünf erfindungsgemäßen Fügeverbindungen 110,120,130,140 und 150 miteinander verbunden, wobei sämtliche Fügeverbindungen, wie weiter oben erläutert, aus eingespritztem Kunststoffmaterial bestehen, welches in einen Hohlraum zwischen den zu verbindenden Teilen eingespritzt wird, diesen vollständig ausfüllt und aushärtet, um die Teile durch Formschluß miteinander zu verbinden und gleichzeitig an der Trennfuge abzudichten. Die Fügeverbindung 110 verbindet den Zylinderdeckel 103 mit dem Außenzylinder 102 der ersten Zylinderstufe. Die Fügeverbindung 120 verbindet den Zylinderdeckel 104 mit dem Zylinderrohr 105 der zweiten Zylinderstufe. Das Zylinderrohr 105 ist verschieblich in einem Verschlußring 111 geführt, der mittels der Fügeverbindung 130 aus eingegossenem Kunststoff am Innenumfang des Außenzylinders 102 befestigt ist. Der Zylinderdeckel 104 bildet zugleich den Kolbenkopf für die zweite Stufe. Im Innern des Zylinders 105 ist die Kolbenstange 107 axial beweglich angeordnet, an deren in Fig. 6 linken Ende mit einer weiteren erfindungsgemäßen Fügeverbindung 140 ein hier relativ schmalwandiger Kolbenring 108 befestigt ist. Die Kolbenstange 107 führt sich zugleich in einem zweiten Verschlußring 112, der mittels der fünften Fügeverbindung 150 an der Innenwand des Zylinders 105 befestigt ist. Alle Teile sind innerhalb kürzester Zeit miteinander verbindbar und die Geometrie der Hohlräume für die Fügeverbindungen 110, 120, 130, 140 und 150 entspricht den vorherigen Ausführungsbeispielen.

Für den Fachmann sind aus der vorhergehenden Beschreibung eine Reihe von Modifikationen ersichtlich, die in den Schutzbereich der anhängenden Ansprüche fallen sollen. Die Anzahl der Vertiefungen bzw. Rillen in den sich überlappenden Wandungsabschnitten der miteinander zu verbindenden Teile korreliert mit den Materialeigenschaften des verwendeten Kunststoffmaterials. Je höher dessen Zugfestigkeit im erhärteten Zustand ist, desto niedriger kann die Anzahl der Rillen ausfallen. Eine Mindestanzahl von beispielsweise sechs Rillen bietet jedoch sowohl hinsichtlich der zu erreichenden Festigkeit der Fügeverbindung als auch hinsichtlich der Dichtungswirkung zwischen den Teilen Vorteile. Die Geometrie der Rillen bzw. Vertiefungen und die Geometrie der am Ende des Aushärtevorgangs entstehenden Körper aus Kunststoffmaterial kann variieren und es versteht sich für den Fachmann, daß die Verarbeitung, insbesondere die Plastifizierungstemperatur, die Einspritztemperatur, die Vorwärmtemperatur der Teile und der Einspritzdruck an das verwendete Material sowie die Geometrie und das Volumen des jeweiligen Hohlraums angepasst werden können. Die beiden zu verbindenden Teile können zusätzlich aufeinander abgestimmte Gewindeabschnitte aufweisen, mit denen sie in einem ersten Montageschritt miteinander verschraubt werden, bevor der Kunststoff in den Hohlraum eingegossen wird. Zur Demontage der Teile braucht die Fügeverbindung nur durch ausreichendes Erwärmen der sich überlappenden Wandungsabschnitte plastifiziert zu werden. Nach dem Entfernen allen Kunststoffmaterials aus den Vertiefungen können die Teile wieder verbunden werden.

Die Beschreibung der Erfindung erfolgt mit Bezug auf zylindrische Teile von Hydraulikzylinder. Die Erfindung kann jedoch auch bei Pneumatikzylindern oder bei anderen miteinander zu verbindenden Teilen eingesetzt werden, insbesondere wenn bei diesen Teilen mit der Verbindung zugleich eine Abdichtung der Trennfuge erreicht werden soll.

## Patentansprüche

1. Fügeverbindung für Funktionsteile von hydraulischen oder pneumatischen Arbeitszylindern wie Stempeln für den untertägigen Bergbau, mit einem einen Außenwandungsabschnitt aufweisenden ersten Teil und einem einen Innenwandungsabschnitt aufweisenden zweiten Teil, wobei beide Wandungsabschnitte (14',15'; 34,35; 54,55) eine Vertiefung (16,17; 36,37; 56,57) aufweisen, die im Verbindungszustand einen Hohlraum bilden, der zum Verbinden der Funktionsteile mit Gußmasse ausgefüllt ist, und eines der Teile eine Einfüll- oder Einspritzöffnung (18; 48; 58) für die Gußmasse aufweist, die über einen Gußkanal (26; 46,47; 66) in die zugehörige Vertiefung mündet, **dadurch gekennzeichnet, daß** die Funktionsteile mit sich mit Spielpassung oder Übergangspassung überlappenden Wandungsabschnitten (14',15'; 34,35; 54,55) zusammenfügbar sind und daß der Hohlraum mit durch Erwärmen plastifizierter, fließfähiger Gußmasse aus Kunststoff ausgefüllt ist, die nach ihrem Aushärten oder Erstarren Scherkraftbelastungen von wenigstens 20 N/mm² standhält und die beiden Teile (2,3; 7,8; 2,11) durch Formschluß miteinander verbindet.

2. Fügeverbindung nach Anspruch 1, **dadurch gekennzeichnet, daß** beide Wandungsabschnitte (14',15'; 34,35; 54,55) mehrere Vertiefungen (16,17;36,37;56,57) aufweisen.

3. Fügeverbindung nach Anspruch 1 oder 2, **dadurch gekennzeichnet, daß** die Vertiefungen aus umlaufenden Riefen, Rillen oder Nuten bestehen, die quer zur Trennfuge zwischen den Teilen ausgerichtet sind.

4. Fügeverbindung nach Anspruch 3, **dadurch gekennzeichnet, daß** die Riefen, Rillen oder Nuten zum Wandungsabschnitt (14',15'; 34,35; 54,55) hin ansteigende Bodenabschnitte (38,39; 40,41) aufweisen.

5. Fügeverbindung nach Anspruch 4, **dadurch gekennzeichnet, daß** die Bodenabschnitte (38,39; 40,41) rechtwinklig zueinander abgewinkelt sind und/oder der Neigungswinkel (α) des längeren Bodenabschnitts (38; 41) zum Wandungsabschnitt (35; 34) 25° bis 35°, insbesondere etwa 30° beträgt.

6. Fügeverbindung nach einem der Ansprüche 2 bis 5, **dadurch gekennzeichnet, daß** die Riefen, Rillen oder Nuten in den Wandungsabschnitten beider Teile derart angeordnet sind, daß die Gußmasse zu Ringen mit kleinen Querschnitten, vorzugsweise rechteckigen Querschnitten erstarrt oder aushärtet.

7. Fügeverbindung nach einem der Ansprüche 2 bis 6, **dadurch gekennzeichnet, daß** benachbarte Vertiefungen (36; 37) in den Wandungsabschnitten (34; 35) durch einen Stegabschnitt (42; 43) voneinander getrennt sind, wobei im Montagezustand die Stegabschnitte (42; 43) der Wandungsabschnitte (34,35) des ersten und zweiten Teils (7,8) unmittelbar übereinander liegen.

8. Fügeverbindung nach einem der Ansprüche 1 bis 7, **dadurch gekennzeichnet, daß** die Vertiefung (57) des Wandungsabschnitts (54) eines der Teile (11) in einen Zuführkanal (72) zu einem Ringraum (71) mündet, in welchem mit der Gußmasse eine Führungsmanschette (70) od.dgl. für einen im Innern dieses Teils (11) axial beweglichen Körper (7) oder für den Teil selbst ausgießbar ist und/oder daß über den Zuführkanal ein Dichtungssystem für die Führungsmanschette ausgießbar ist.

9. Fügeverbindung nach einem der Ansprüche 1 bis 8, **dadurch gekennzeichnet, daß** die Gußmasse eine Spritzgußmasse und/oder die Gußmasse aus Kunststoff im ausgehärteten oder erstarrten Zustand Scherkraftbelastungen von wenigstens 45 N/mm² standhält.

10. Fügeverbindung nach einem der Ansprüche 1 bis 9, **dadurch gekennzeichnet, daß** die Gußmasse ein Thermoplast, insbesondere ein Polyamid oder ein Polyphenylenether oder ein Polyterephtalat, insbesondere ein Polybutylenetherephtalat, oder ein Polyvinylidenfluorid ist.

11. Fügeverbindung nach einem der Ansprüche 1 bis 10, **dadurch gekennzeichnet, daß** die Gußmasse eine faserverstärkte Gußmasse, insbesondere eine glasfaserverstärkte Gußmasse ist.

12. Fügeverbindung nach einem der Ansprüche 1 bis 11 **dadurch gekennzeichnet, daß** die Fügeverbindung zur Wartung der Funktionsteile der Arbeitsvorrichtung durch Erwärmen, insbesondere durch induktives Beheizen der Wandungsabschnitte, und Plastifizieren des Kunststoffmaterials trennbar ist.

## Claims

1. Joining connection for functional parts of hydraulic or pneumatic operating rams such as props for underground mining, with a first part having an outer wall section and a second part having an inner wall section, wherein both wall sections (14',15'; 34,35; 54,55) comprise a depression (16,17; 36,37; 56,57), which in the connected state form a cavity, being filled for connecting of the functional parts with a casting compound, and wherein one of the parts comprises a filling or injection opening (18; 48; 58) for the casting compound, leading via a casting channel (26; 46,47; 66) into the corresponding depression, **characterised in that** the functional parts can be joined together and connected to each other with mutually overlapping wall sections (14',15'; 34,35; 54,55), with the sections are overlapping with a transition fit or a clearance fit, and that the cavity is being filled with a casting compound of plastic, which is plasticised and fluid by means of heating, and which after its hardening or solidification withstands shear force loads of at least 20 N/mm² and connects the two parts (2,3; 7,8; 2,11) to each other by means of a positive form fit.

2. Joining connection in accordance with Claim 1, **characterised in that** both wall sections (14',15'; 34,35; 54,55) comprise a plurality of depressions (16,17;36,37;56,57).

3. Joining connection in accordance with Claim 1 or 2, **characterised in that** the depressions consist of circumferential corrugations, grooves or channels which are aligned at right-angles to the separating gap between the parts.

4. Joining connection in accordance with Claim 3, **characterised in that** the corrugations, grooves or channels are having faces (38,39; 40,41) rising up to the wall section (14',15'; 34,35; 54,55).

5. Joining connection in accordance with Claim 4, **characterised in that** the faces (38,39; 40,41) are angled at right-angles to each other and/or the angle of inclination (α) of the longer face (38; 41) to the wall section (35; 34) is 25° to 35°, in particular is approximately 30°.

6. Joining connection in accordance with any one of the Claims 2 to 5, **characterised in that** the corrugations, grooves or channels are arranged in the wall sections of both parts such that the casting compound solidifies or hardens to rings with small cross-sections, preferably right-angled cross-sections.

7. Joining connection in accordance with any one of the Claims 2 to 6, **characterised in that** adjacent depressions (36; 37) in the wall sections (34; 35) are separated from each other by a web (42; 43), and in the assembled state the webs (42; 43) of the wall sections (34, 35) of the first and second parts (7,8) lie directly opposed to each other.

8. Joining connection in accordance with any one of the Claims 1 to 7, **characterised in that** the depression (57) of the wall section (54) of one of the parts (11) leads into a feeder channel (72) to an annular space (71), adapted to be filled with the casting compound in order to cast a guide sleeve (70) or similar for a body (7) that is axially movable in the interior of this part (11) or for the part itself, and/or that via the feeder channel a sealing system for the guide sleeve can be cast.

9. Joining connection in accordance with any one of the Claims 1 to 8, **characterised in that** the casting compound is an injection casting compound and/or that the casting compound of plastic in the hardened or solidified state withstands shear force loads of at least 45 N/mm².

10. Joining connection in accordance with one of the Claims 1 to 9, **characterised in that** the casting compound is a thermoplastic, in particular a polyamide or a polyphenylether or a polyterephtalate, in particular a polybutyleneterephtalate, or a polyvinylidenfluoride.

11. Joining connection in accordance with one of the Claims 1 to 10, **characterised in that** the casting compound is a fibre-reinforced casting compound, in particular a glass fibre-reinforced casting compound.

12. Joining connection in accordance with one of the Claims 1 to 11, **characterised in that** for the maintenance of the functional parts of the operating device, the joining connection may be separated by means of heating and plasticisation of the plastic material.

## Revendications

1. Assemblage de pièces fonctionnelles de cylindres de travail hydrauliques ou pneumatiques tels que des étançons pour les mines souterraines, comprenant une première pièce dans une partie de paroi extérieure et une seconde pièce dans une partie de paroi intérieure, les deux parties de parois (14', 15' ; 34, 35 ; 54, 55) présentant un renfoncement (16, 17 ; 36, 37 ; 56, 57) qui en position d'assemblage forme un espace creux, qui pour l'assemblage des pièces fonctionnelles est rempli d'une masse de coulée, et l'une des parties comporte un orifice de remplissage ou d'injection (18, 48 ; 58) pour la masse de coulée, qui débouche par un canal de coulée (26 ; 46, 47 ; 66) dans le renfoncement correspondant, **caractérisé en ce que** les pièces fonctionnelles sont assemblables entre elles avec des parties de parois (14', 15' ; 34, 35 ; 54, 55) qui se recouvrent, avec un ajustement à jeu ou un ajustement avec une zone de transition et **en ce que** l'espace creux est rempli de matière synthétique pouvant être liquide par chauffage qui, après durcissement ou refroidissement peut résister à des charges d'efforts de cisaillement d'au moins 20N/mm² et qu lie ensemble les deux pièces (2, 3 ; 7,8 ; 2, 11) par coopération de formes.

2. Assemblage selon la revendication 1, **caractérisé en ce que** les deux parties des parois (14', 15' ; 34, 35 ; 54, 55) comportent plusieurs renfoncements (16, 17 ; 36, 37 ; 56, 57).

3. Assemblage selon la revendication 1 ou 2, **caractérisé en ce que** les renfoncements sont constitués par des rainures, stries ou gorges périphériques, qui sont dirigées perpendiculairement à la fente de séparation entre les pièces.

4. Assemblage selon la revendication 3, **caractérisé en ce que** les rainures, stries ou gorges présentent des parties de fond (38, 39 ; 10, 41) dont la pente monte vers la partie de paroi (14', 15' ; 34, 35 ; 54, 55).

5. Assemblage selon la revendication 4, **caractérisé en ce que** les parties de fond (38, 39 ; 40, 41) forment un angle droit l'un par rapport à l'autre et /ou l'angle d'inclinaison (α) de la partie de fond la plus longue (38 ; 41) par rapport à la partie de paroi (35 ; 34) est de 25° à 35°, en particulier est égal à 30° environ.

6. Assemblage selon l'une des revendications 2 à 5 ; **caractérisé en ce que** les rainures, stries et gorges sont agencées dans les deux parties de telle sorte que la masse de coulée puisse se refroidir ou durcir sous forme d'anneaux de faible section, de préférence de section rectangulaire.

7. Assemblage selon l'une des revendications 2 à 6, **caractérisé en ce que** les renforcements adjacents (36 ; 37) dans les parties de parois (34 ; 35) sont séparés l'un de l'autre par une partie de nervure (42 ; 43), de sorte qu'en position de montage les parties de nervure (42 ; 43) des parties de parois (34 ; 35) de la première et de la seconde pièce (7, 8) sont situées directement l'une au dessus de l'autre.

8. Assemblage selon l'une des revendications 1 à 7, **caractérisé en ce que** le renfoncement (57) de la partie de paroi (54) de l'une des pièces (11) débouche dans un canal d'amenée (72) dans un espace annulaire (71), dans lequel, une manchette de guidage (70) ou analogue pour un corps (7) axialement mobile à l'intérieur de cette partie (11) ou pour celui-ci est démontable avec la masse de coulée et/ou que sur le canal d'amenée un système d'étanchéité pour la manchette de guidage est démontable.

9. Assemblage selon l'une des revendications 1 à 8, **caractérisé en ce que** la masse de coulée constituée par une masse injectée et/ou la masse coulée en matière synthétique présente à l'état refroidi ou durci une résistance à des charges d'effort de cisaillement d'au moins 45N/mm².

10. Assemblage selon l'une des revendications 1 à 3, **caractérisé en ce que** la masse de coulée est un thermoplastique, en particulier un polyamide ou un polyphényléneéther ou un polytéréphtalate, ou un polyfluorovinilidène.

11. Assemblage selon l'une des revendication 1 à 10, **caractérisé en ce que** la masse de coulée est une masse de coulée renforcée de fibres, en particulier une masse de coulée renforcée de fibres de verre.

12. Assemblage selon l'une des revendications 1 à 19, **caractérisé en ce que** pour la maintenance des pièces fonctionnelles du dispositif de travail, celles-ci sont séparables par chauffage, en particulier par chauffage par induction des parties de parois et ramollissement plastique de la matière synthétique.
